# EUROPEAN PATENT SPECIFICATION

(11) **EP 4 049 913 B1**
(45) Date of publication and mention of the grant of the patent: **10.12.2025**
(21) Application number: 21159052.6
(22) Date of filing: 24.02.2021
(51) Int. Cl.: B60W 60/00

(54) **VEHICLE PATH PLANNING**
FAHRZEUGPFADPLANUNG
PLANIFICATION DE TRAJET DE VÉHICULE

(43) Date of publication of application: 31.08.2022
(73) Proprietor: Zenseact AB, 417 56 Göteborg (SE)
(72) Inventor: Gyllenhammar, Magnus, 435 43 Pixbo (SE); Zandén, Carl, 437 38 Lindome (SE); Vakilzadeh, Majid Khorsand, 431 66 Mölndal (SE)
(74) Representative: Valea AB

(56) References cited:
- DE-A1- 102016 219 122
- DE-A1- 102018 205 658
- DE-A1- 102018 210 026
- DE-A1- 102019 210 475
- US-A1- 2019 126 911

## Description

### TECHNICAL FIELD

The present disclosure relates to supporting path planning of an automated driving system, ADS, of a vehicle.

### BACKGROUND

Within the automotive field, there has for quite some years been activity in development of autonomous vehicles. An increasing number of modern vehicles have advanced driver-assistance systems, ADAS, to increase vehicle safety and more generally road safety. ADAS - which for instance may be represented by adaptive cruise control, ACC, collision avoidance system, forward collision warning, etc. - are electronic systems that may aid a vehicle driver while driving. Moreover, in a not too distant future, Autonomous Driving, AD, will to greater extent find its way into modern vehicles. AD along with ADAS will herein be referred to under the common term Automated Driving System, ADS, corresponding to all of different levels of automation, for instance as defined by the SAE J3016 levels (0 - 5) of driving automation.

An ADS may be construed as a complex combination of various components that can be defined as systems where perception, decision making, and operation of the vehicle - at least in part - are performed by electronics and machinery instead of a human driver. This may include handling of the vehicle, destination, as well as awareness of surroundings. While the automated system has control over the vehicle, it allows the human operator to leave all or at least some responsibilities to the system. To perceive its surroundings, an ADS commonly combines a variety of sensors, such as e.g. radar, LIDAR, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

Assuring the safety of an ADS is one of the central challenges in being able to release such a system to the market. It is of great importance that an ADS neither exposes its vehicle occupant(s) nor surrounding traffic participants to unacceptable risks. In order to develop a path planning system of an ADS, it is thus necessary to prove its safety. Accordingly, path planning policies of an ADS - not the least an early version ADS - may be, and/or expected to be, rather or even extensively conservative to avoid certain risk exposure. Path planning policies considered too conservative by occupants of an ADS vehicle may, however, render said occupants being frustrated with the ADS's decisiveness in traffic and/or with the ADS's inability to efficiently make a trip from A to B.

US 2019/126911 A1 and DE 10 2016 219122A1 disclose path planning systems.

### SUMMARY OF THE INVENTION

It is therefore an object of the invention to provide an approach supporting ADS path planning in view of risk exposure in an improved and/or alternative manner.

The object above is solved by a method as defined in claim 1, an occupant constellation assessment system as defined in claim 6 and a computer program product as defined in claim 7. Preferred embodiments are defined in the dependent claims.

The disclosed subject-matter relates to a method performed by an occupant constellation assessment system for supporting path planning of an ADS of a vehicle.

The disclosed subject-matter further relates to an occupant constellation assessment system for - and/or adapted for - supporting path planning of an ADS of a vehicle.

Furthermore, the disclosed subject-matter relates to a vehicle comprising an occupant constellation assessment system as described herein.

Moreover, the disclosed subject-matter relates to a computer program product comprising a computer program containing computer program code means arranged to cause a computer or a processor to execute the steps of an occupant constellation assessment system described herein, stored on a computer-readable medium or a carrier wave.

The disclosed subject-matter further relates to a non-volatile computer readable storage medium having stored thereon said computer program product.

Thereby, there is introduced an approach providing a driving policy enabling optimizing performance of an ADS of a vehicle in consideration of safety of potential vehicle occupants. That is, since there is determined positions and bodily characteristics of potential occupants of the vehicle, there is established a current vehicle occupant constellation indicative of how potential vehicle occupants are seated within the vehicle, and further, indicative of body structure attributes of said occupants. Furthermore, that is, since there is determined occupant injury risk conditions associated with one or more potential critical events pertinent the determined positions and the determined bodily characteristics, there is established occupant injury risks, risk exposure and/or vulnerabilities tied to the current occupant constellation for various types of critical events such as various types of accidents or near accidents. That is, depending on the number of vehicle occupants and one or more of said vehicle occupants' positions - e.g. seat positions, seating directions and/or postures - and further, depending on said vehicle occupants' bodily characteristics - e.g. bodily dimensions, weight, gender, age and/or medical history - various types of potential critical events may be severe to differing extent. For instance, some types of pelvis injuries are more common for small and female passengers, whereas infants or young kids have less developed neck muscles and thus are more prone to neck injuries. Furthermore, some injuries might occur more frequently in specific types of critical incidents, such as being more common for one or more of right-hand side, left-hand side, front or rear collisions. Thus, a vehicle occupant being seated in a specific section of a vehicle - such as in the front or rear, to the left or right - and/or being seated in a specific direction of the vehicle - such as in a forward or backward direction - and/or having a specific sitting position - such as sitting upright or reclined - in combination with said vehicle occupant having specific body structure attributes - such as being tall or short, obese or underweight, female or male, infant/child/elderly or adult, physically healthy or of fragile bone structure etc. - is exposed to specific types of risks in view of potential critical events that may differ from risks said vehicle occupant would be exposed to should he or she be positioned differently and/or have different bodily characteristics. Thus, a vehicle occupant represented by e.g. an infant, elderly and/or person with a medical history rendering said person vulnerable as compared to e.g. an average-sized male adult - may equate to a greater occupant injury risk and/or risk exposure in view of a critical event, even more so should said vehicle occupant be positioned e.g. on the right-hand side of the vehicle should said potential critical event be represented by a right-hand side collision. Moreover, that is, since there is determined a path planning policy comprising driving manoeuvres constraints for the ADS based on the occupant injury risk conditions, there is established a driving policy for the ADS taking into consideration occupant injury risks, risk exposure and/or vulnerabilities of a current vehicle occupant constellation, with driving manoeuvres being adapted - such as allowing the most appropriate set of driving manoeuvres to be made available - in view thereof. Accordingly, there may be selected a path planning policy determined to be most safe and/or most appropriate in view of the current set of vehicle occupants, which subsequently enables different driving policies to be provided for different vehicle occupant constellations, e.g. while maintaining the same level of safety. This allows the ADS to subsequently achieve its objectives in the most efficient manner without impacting the safety of neither its occupants nor the surrounding traffic, and further, allows vehicle occupants to - e.g. by means of a relatively defensive driving style - perceive an increased level of safety and precaution where applicable, for instance when a driver is travelling with an infant.

For that reason, an approach is provided for supporting ADS path planning in view of risk exposure in an improved and/or alternative manner.

The technical features and corresponding advantages of the above-mentioned method will be discussed in further detail in the following.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates a schematic view of exemplifying vehicles respectively comprising an exemplifying occupant constellation assessment system according to embodiments of the disclosure;
**Fig. 2** is a schematic block diagram illustrating an exemplifying occupant constellation assessment system according to embodiments of the disclosure;
**Fig. 3** is a flowchart depicting an exemplifying method performed by an occupant constellation assessment system according to embodiments of the disclosure; and
**Figs. 4a****-d** illustrate schematic views of exemplifying risk maps in view of exemplifying vehicles.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to supporting path planning of an ADS of a vehicle, there will be disclosed an approach providing a driving policy enabling optimizing performance of said ADS in consideration of safety of potential vehicle occupants.

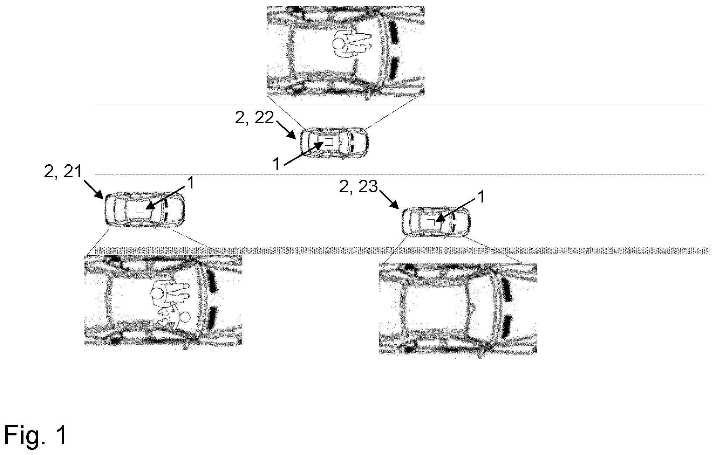

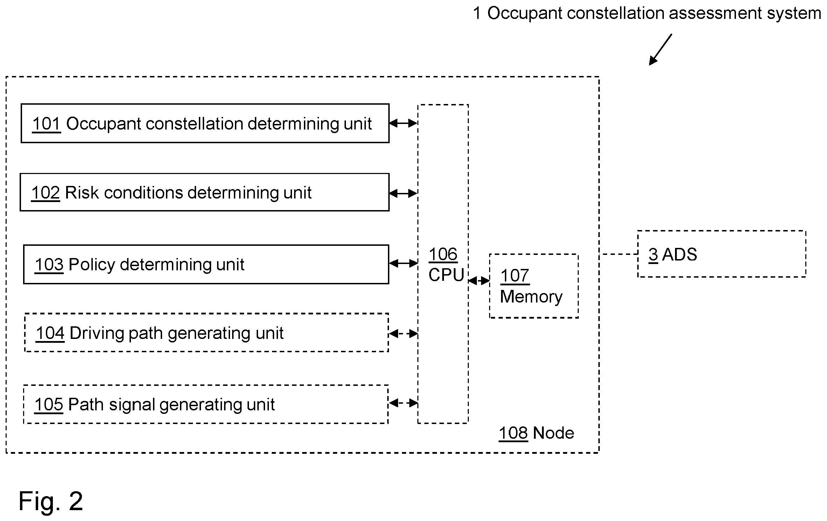

Referring now to the figures, there is depicted in **Fig. 1** a schematic view of exemplifying **vehicles 2** - here a **first vehicle 21,** a **second vehicle 22** and a **third vehicle 23** - respectively comprising an exemplifying **occupant constellation assessment system 1** according to embodiments of the disclosure, and depicted in **Fig. 2** a schematic block diagram illustrating an exemplifying occupant constellation assessment system 1 according to embodiments of the disclosure. The occupant constellation assessment system 1 is adapted for supporting path planning of an **ADS 3** of a vehicle 2, and may potentially be comprised in said ADS 3 and/or be provided in association and/or connection therewith. The phrase "occupant constellation assessment system" may refer to "vehicle assessment system", "path planning policy-determining system" and/or "policy selection system", and further to "occupant constellation assessment system of a vehicle". The phrase "for supporting path planning", on the other hand, may refer to "adapted for supporting path planning", "for path planning", "for supporting path planning policy selection", "for supporting driving policy selection" and/or "for supporting trajectory planning", and according to an example further to "for supporting risk exposure-adapted path planning", "for supporting path planning with unaffected safety levels" and/or "for optimizing performance with unaffected safety levels". Moreover, "method performed by an occupant constellation assessment system" may refer to "at least partly computer-implemented method performed by an occupant constellation assessment system".

The exemplifying vehicle(s) 2 may be represented by any arbitrary - e.g. known - manned or unmanned vehicle, for instance an engine-propelled or electrically-powered vehicle such as a car, truck, lorry, van, bus and/or tractor. Moreover, the term "vehicle" may refer to "autonomous and/or at least partly autonomous vehicle", "driverless and/or at least partly driverless vehicle", and/or "self-driving and/or at least partly self-driving vehicle". The exemplifying ADS 3 may be represented by any arbitrary ADAS or AD system e.g. known in the art and/or yet to be developed. Moreover, respective vehicle 2 and/or ADS 3 may comprise, be provided with and/or have onboard an optional perception system (not shown) and/or similar system and/or functionality adapted to estimate surroundings of the vehicle 2, and subsequently adapted to estimate world views of the surroundings e.g. with support from a - e.g. commonly known - digital map such as a high definition, HD, map, and/or an equivalent and/or successor thereof. Such an exemplifying perception system or similar system may refer to any commonly known system and/or functionality, e.g. comprised in one or more electronic control modules, ECUs, and/or nodes of the vehicle 2 and/or the ADS 3, adapted and/or configured to interpret sensory information - relevant for driving of the vehicle 2 - to identify e.g. objects, obstacles, vehicle lanes, relevant signage, appropriate navigation paths etc. The exemplifying perception system or similar system - which may be adapted to support e.g. sensor fusion, tracking, localization etc. - may thus be adapted to rely on sensory information. Such exemplifying sensory information may for instance be derived from one or more - e.g. commonly known - sensors comprised in and/or provided onboard the vehicle 2 adapted to sense and/or perceive the vehicle's 2 whereabouts and/or surroundings, for instance represented by one or a combination of one or more of surrounding detecting sensors, such as image capturing devices e.g. cameras, radar, lidar, ultrasonics etc., and/or a positioning system, odometer, inertial measurement units etc.

In exemplifying Fig. 1, which here illustrates right-hand traffic, the exemplifying first vehicle 21 carries two vehicle occupants represented by e.g. an average-sized adult male driver positioned upright in a forward-facing direction in a driver's seat on the left-hand side and an infant - e.g. in a child seat - positioned reclined in a backward-facing direction in a front passenger seat on the right-hand side of the first vehicle 21. The exemplifying second vehicle 22, on the other hand, carries a sole vehicle occupant represented by a driver which similar to the driver of the first vehicle 21 is e.g. an average-sized adult male positioned upright in a forward-facing direction in a driver's seat on the left-hand side of the second vehicle 22, while the exemplifying third vehicle 23 in an exemplifying manner travels without vehicle occupants.

The occupant constellation assessment system 1 is - e.g. by means of an **occupant constellation determining unit 101** - adapted and/or configured for determining positions and bodily characteristics of potential occupants of the vehicle 2. Thereby, there is established a current vehicle occupant constellation indicative of how potential vehicle occupants are seated within the vehicle 2, and further, indicative of body structure attributes of said occupants. The bodily characteristics may, optionally, comprise indications of bodily dimensions, weight, gender, age and/or medical history of the potential occupants. Thereby, the occupant constellation assessment system 1 may learn of physical attributes of the potential vehicle occupants, relating to one or more types of bodily characteristics. Furthermore, optionally, said positions may comprise seat positions, seating directions and/or postures of the potential occupants. Thereby, the occupant constellation assessment system 1 may learn of how the potential vehicle occupants are spread out and/or distributed - i.e. where seated - within the vehicle 2, such as seated in the front, in the rear, on the left-side, on the right-side etc. Additionally, or alternatively, the occupant constellation assessment system 1 may thereby learn of in what direction said occupants are seated, such as seated in a forward-direction, in a backward-direction etc. Furthermore, additionally or alternatively, the occupant constellation assessment system 1 may thereby learn of seating postures of said occupants i.e. how they are sitting and/or potentially lying, such as whether seated upright, reclined, leaning against a vehicle side window and/or interior etc.

In view of exemplifying Fig. 1, there may hence in an exemplifying manner be determined that for the first vehicle 21, there is positioned upright in the left-hand side front seat in a forward-facing direction a vehicle occupant with bodily characteristics represented by an average-sized adult male, and positioned reclined in the right-hand side front seat in a backward-facing direction yet another vehicle occupant with bodily characteristics corresponding to those of an infant. Correspondingly, there may in an exemplifying manner be determined that for the second vehicle 22, there is positioned - similarly to the first vehicle 21 - upright in the left-hand side front seat in a forward-facing direction a vehicle occupant with bodily characteristics represented by an average-sized adult male, while for the third vehicle 23 there may in an exemplifying manner be determined that there are no occupants onboard said vehicle 23. In exemplifying Fig. 1, neither of the vehicle occupants were determined to have a medical history, even though according to other examples, that may very well be the case.

Determining positions and bodily characteristics of potential vehicle occupants may be accomplished in any feasible - e.g. known - manner, such as with support from one or more sensors e.g. occupant-detecting sensors onboard the vehicle 2, e.g. image-capturing devices such as cameras and/or seat sensors detecting presence and/or weight. Moreover, determining said vehicle occupant(s)' bodily characteristics may additionally or alternatively be accomplished by obtaining user-provided and/or pre-stored personal data of said occupants, for instance provided via a user interface and/or HMI such as an interactive display, and/or derived upon identification of an occupant. According to an example, such information may e.g. be derived from biometric and/or keyless vehicle entry, in which the fingerprint and/or remote control used to enter the vehicle 2 may be connected to a user profile containing the bodily characteristic information. The potential occupants of the vehicle 2, on the other hand, may be represented by any feasible number, for instance represented by zero, one, two, three, four, five etc. It may be noted that not necessarily all vehicle occupants need to be included when determining vehicle occupants' positions and bodily characteristics; one or more occupants may potentially be left out e.g. due to irrelevance and/or due to insufficient detection and/or identification of - and/or insufficient data associated with - said occupant(s). The phrase "determining positions and bodily characteristics" may refer to "deriving and/or obtaining positions and bodily characteristics" and/or "determining an occupant constellation and/or an occupant constellation profile based on positions and bodily characteristics", and according to an example further to "determining positions and bodily characteristics [...] with support from one or more onboard occupant-detecting sensors, and/or with support from user-provided and/or pre-stored personal data of said vehicle occupants". Moreover, "bodily characteristics" may in this context refer to "bodily attributes", "physical characteristics", "body characteristics", "body structure characteristics" and/or "anatomy characteristics". Furthermore, the phrase "determining bodily characteristics comprising indications of bodily dimensions [...]" may refer to "determining bodily characteristics comprising estimated bodily dimensions [...]" and/or "determining bodily characteristics comprising bodily dimensions [...]", whereas "body dimensions" may refer to "body dimensions e.g. sitting height, leg length and/or femoral length". Moreover, "age" may in this context refer to "age span", whereas "medical history" may refer to "medical history rendering and/or implying vulnerability e.g. to physical strain", "user-provided and/or occupant-provided medical history" and/or "user-approved and/or occupant-approved medical history". Furthermore, the phrase "seat positions" may refer to "geographical positions within said vehicle", whereas "seating directions" may refer to "vehicle seat directions". The phrase "postures", on the other hand, may refer to "seating postures" and/or "sitting and/or lying positions".

The occupant constellation assessment system 1 is further - e.g. by means of a **risk conditions determining unit 102** - adapted and/or configured for determining occupant injury risk conditions associated with one or more potential critical events pertinent the determined positions and the determined bodily characteristics. Thereby, there is established occupant injury risks, risk exposure and/or vulnerabilities tied to the current occupant constellation for various types of critical events such as various types of accidents or near accidents. That is, depending on the number of vehicle occupants and one or more said vehicle occupants' positions - e.g. seat positions, seating directions and/or postures - and further, depending on said vehicle occupants' bodily characteristics - e.g. bodily dimensions, weight, gender, age and/or medical history - various types of potential critical events may be severe to differing extent. For instance, some types of pelvis injuries are more common for small and female passengers, whereas infants or young kids have less developed neck muscles and thus are more prone to neck injuries. Furthermore, some injuries might occur more frequently in specific types of critical incidents, such as being more common for one or more of right-hand side, left-hand side, front or rear collisions. Thus, a vehicle occupant being seated in a specific section of a vehicle 2 - such as in the front or rear, to the left or right - and/or being seated in a specific direction of the vehicle 2 - such as in a forward or backward direction - and/or having a specific sitting position - such as sitting upright or reclined - in combination with said vehicle occupant having specific body structure attributes - such as being tall or short, obese or underweight, female or male, infant/child/elderly or adult, physically healthy or of fragile bone structure etc. - is exposed to specific types of risks in view of potential critical events that may differ from risks said vehicle occupant would be exposed to should he or she be positioned differently and/or have different bodily characteristics. Thus, a vehicle occupant represented by e.g. an infant, elderly and/or person with a medical history rendering said person vulnerable as compared to e.g. an average-sized male adult - may equate to a greater occupant injury risk and/or risk exposure in view of a critical event, even more so should said vehicle occupant be positioned e.g. on the right-hand side of the vehicle 2 should said potential critical event be represented by a right-hand side collision.

In view of exemplifying Fig. 1, there may hence in an exemplifying manner be concluded that the determined occupant injury risk conditions differ between the first vehicle 21, the second vehicle 22 and the third vehicle 23, in that the occupant constellations differ between said three vehicles 21, 22, 23. For the second vehicle 22 - as compared to the third vehicle 23 - there may be determined that the occupant injury risk conditions indicate a higher occupant injury risk attributed the exemplifying driver positioned in the left-hand side front seat of the second vehicle 22, not the least in view of potential critical events including left-hand side and/or front collisions. Similarly, for the first vehicle 21 - as compared to the second vehicle 22 and third vehicle 23 - there may be determined that the occupant injury risk conditions indicate a higher occupant injury risk attributed the exemplifying infant in the right-hand side front seat, not the least in view of potential critical events including right-hand side and/or front collisions.

The occupant injury risk conditions may be expressed in any feasible manner, e.g. as information and/or one or more indicators indicating injury risks, risk exposure and/or vulnerabilities in view of the occupants' positions and bodily characteristics for respective occupant - separately and/or combined - associated with different potential critical events. Determining occupant injury risk conditions may be accomplished in any feasible manner. Optionally, however, said occupant injury risk conditions may be determined with input from pre-stored statistical data indicative of different types of occupant injuries inflicted by various types of critical events in view of differing vehicle occupants' positions and/or bodily characteristics. Thereby, pre-stored data may be confronted covering gathered occupant injury risks, risk exposure and/or vulnerabilities associated with differing occupant bodily characteristics and/or differing vehicle positions tied to differing types of vehicle accidents or near accidents. Such pre-stored statistical data may comprise any arbitrary feasible amount of information, based on which injury risks may be derived applicable for a current set of vehicle occupants. The phrase "determining occupant injury risk conditions" may refer to "deriving and/or obtaining occupant injury risk conditions", whereas "occupant injury risk conditions" may refer to "occupant(s) injury risks" and/or "occupant injury risk considerations" and according to an example further to "occupant injury risk exposures", "occupant injury risk conditions indicative of occupant injury risks and/or risk exposure" and/or "occupant safety conditions". "Occupant injury risk conditions associated with one or more potential critical events", on the other hand, may refer to "occupant injury risk conditions tied to, pertinent and/or inflictable by one or more potential critical events", whereas "one or more potential critical events" may refer to "one or more different types of potential critical events", "one or more potential accidents and/or near accidents e.g. collisions" and/or merely "one or more critical events". Moreover, "potential critical events pertinent said positions and said bodily characteristics" may refer to "potential critical events applicable and/or relevant for said positions and said bodily characteristics".

The occupant constellation assessment system 1 is further - e.g. by means of a **policy determining unit 103** - adapted and/or configured for determining a path planning policy comprising driving manoeuvres constraints for the ADS 3 based on the occupant injury risk conditions. Thereby, there is established a driving policy for the ADS 3 taking into consideration occupant injury risks, risk exposure and/or vulnerabilities of a current vehicle occupant constellation, with driving manoeuvres being adapted - such as allowing the most appropriate set of driving manoeuvres to be made available - in view thereof.

Accordingly, there may be selected a path planning policy determined to be most safe and/or most appropriate in view of the current set of vehicle occupants, which subsequently enables different driving policies to be provided for different vehicle occupant constellations, e.g. while maintaining the same level of safety. This allows the ADS 3 to subsequently achieve its objectives in the most efficient manner without impacting the safety of neither its occupants nor the surrounding traffic, and further, allows vehicle occupants to - e.g. by means of a relatively defensive driving style - perceive an increased level of safety and precaution where applicable, for instance when - as exemplified with the first vehicle 21 of Fig. 1 - a driver is travelling with an infant.

In view of exemplifying Fig. 1, there may hence for the ADS 3 of the third vehicle 23 - with its non-existing vehicle occupants - in an exemplifying manner be determined and/or selected a rather different driving policy as compared to e.g. the first and/or second vehicles 21, 22, in that without occupants the third vehicle 23 may be allowed to take different decisions that can protect other road users more efficiently. That is, the third vehicle 23 may for instance ultimately in extremely rare events such as a crash just ahead, as a result of its risk/driving policy find that the lowest risk path is to utilize a controlled collision with a road side barrier without risk of fatalities or injuries to its non-existing occupants, thus providing the opportunity of driving manoeuvres constraints allowing decreased margins to other traffic participants as in the worst case there may be the option to drive off the main lanes. For the ADS 31 of the exemplifying first vehicle 21, on the other hand, running into the barrier of the highway would not be a valid option; rather, the path planning policy for the first vehicle 21 may in an exemplifying manner be determined and/or selected to be rather cautious and stipulate driving manoeuvres constraints comprising for instance left lane restrictions and/or overtaking restrictions, and/or for instance longer time gaps to lead vehicles and/or generally lower speeds, that significantly reduces the risk of said first vehicle 21 being hit on the right-hand side by other vehicles.

The path planning policy may be represented by any feasible path planning strategy taking into consideration the occupant injury risk conditions, i.e. occupant injury risks, risk exposure and/or vulnerabilities tied to the current occupant constellation for various types of critical events. The path planning policy may further be valid for any predeterminable time period, for instance up until updated positions and/or bodily characteristics of potential vehicle occupants of the vehicle 2 are determined. Said path planning policy may accordingly potentially be valid e.g. until the end of a vehicle cycle and/or arrival at a destination, and/or continuously and/or intermittently be updated for instance to handle changed occupants positions such as to/from upright/reclined sitting positions and/or to/from forward/backward seating directions etc. The driving manoeuvres constraints, on the other hand, may be represented by any feasible constraints and/or restrictions affecting the manner in which the vehicle 2 is manoeuvred as it travels. At least a first of the path planning policy's driving manoeuvres constraints may for instance be established based on occupant risk and/or risk exposure rendered by a corresponding potential driving manoeuvre - and/or activating/deactivating one or more path planning features such as e.g. a lane-change feature - in view of the occupant injury risk conditions. Said driving manoeuvres constraints may accordingly be represented by one or more constraints considered and/or established to be relevant for handling and/or mitigating the current occupant constellation injury risks and/or risk exposure, and may for instance relate to lane-change constraints, left/right lane constraints, overtaking constraints, evasive manoeuvres constraints, constraints in view of thresholds defining minimum time-gaps and/or distances to other vehicles/objects, etc. The phrase "determining a path planning policy" may refer to "selecting a path planning policy", and further to "determining a path planning strategy". "Path planning policy comprising driving manoeuvres constraints", on the other hand, may refer to "path planning policy stipulating, specifying and/or indicating driving manoeuvres constraints", whereas "driving manoeuvres constraints" may refer to "driving actuations constraints", "risk-based constraints" and/or "driving manoeuvres restrictions". Moreover, the phrase "path planning policy [...] for said ADS" may refer to "path planning policy [...] applicable for said ADS" and/or to "path planning policy [...] currently applicable for said ADS", whereas "based on said occupant injury risk conditions" may refer to "using as input and/or as input conditions said occupant injury risk conditions".

Moreover, the phrase "path planning policy comprising driving manoeuvres constraints" may optionally refer to "path planning policy comprising driving manoeuvres constraints and/or driving state/conditions constraints". Thereby, the path planning policy may - in addition to and/or as an alternative to the driving manoeuvres constraints - comprise driving states/conditions limitations and/or restrictions to define driving states and/or driving conditions to avoid in order to reach risk reduction. Thus, for instance, as an alternative to and/or in addition to e.g. limit a lane-change manoeuvre of the ADS 3, the state/conditions constraint(s) may limit the the ADS 3 to only be allowed to occupy e.g. the right-lane. Then, if the ADS 3 would find itself in a left-lane due to e.g. a highway merge or similar, the ADS 3 would still be allowed to do the lane-change manoeuvre but in this case to avoid the state it finds itself in.

Further optionally, the determining a path planning policy may comprise - and/or the policy determining unit 103 may be adapted and/or configured for - selecting out of multiple path planning policy candidates comprising differing sets of driving manoeuvres constraints - which path planning policy candidates are associated with varying respective predetermined occupant injury risk conditions - a path planning policy candidate representative of the determined occupant injury risk conditions. Thereby, there is derived - out of two or more available predetermined path planning profiles - a path planning policy profile comprising a predetermined set of driving manoeuvres constraints, which selected path planning profile is deemed to match or essentially match the occupant injury risk conditions valid for the current occupant constellation. For instance, a closest match may be picked in a conservative manner, such that in case choosing between e.g. two candidates respectively essentially being representative of the occupant injury risk conditions valid for the current occupant constellation, the candidate resulting in the lowest risk of the two candidates may be selected in order to avoid risk levels being violated.

The multiple path planning policy candidates may be represented by any feasible number of candidates, ranging for instance from two up to tens or hundreds thereof. Furthermore, the candidates may be constructed, envisioned and/or analyzed in design-time, and the safety-case and analysis conducted for each candidate. Moreover, the sets of driving manoeuvres constraints of the candidates may respectively comprise one or more respective driving manoeuvres constraints, ranging for instance from a single constraint up to tens or even hundreds thereof. The various predetermined occupant injury risk conditions, on the other hand, tied to respective candidate, may be represented by any feasible number of occupant injury risk conditions, ranging for instance from a single occupant injury risk condition up to tens or even hundreds thereof. Moreover, the candidates may differ from one another by one or more driving manoeuvres constraints. For instance, one of the path planning policy candidates - in an exemplifying manner representing a cautious profile - may for instance be tied to predetermined occupant injury risk conditions represented by increased, higher and/or relatively high occupant injury risk attributed infant positioned in right-hand side front seat especially in view of right-hand side and/or front collisions, which cautious profile then may comprise a set of driving manoeuvres constraints for instance represented by - for right-hand traffic - left lane restrictions and/or overtaking restrictions. Similarly, another of the path planning policy candidates - in an exemplifying manner representing a no-occupants profile - may for instance be tied to predetermined occupant injury risk conditions represented by decreased, lower and/or relatively low occupant injury risk attributed non-existence of vehicle occupants, which no-occupants profile then may comprise a set of driving manoeuvres constraints for instance represented by aggressive evasive manoeuvres permission and/or relatively short/low and/or decreased time-gap threshold(s). In view of exemplifying Fig. 1, the cautious path planning policy profile above may accordingly in an exemplifying manner be selected for the first vehicle 21, whereas the no-occupants profile in an exemplifying manner may be selected for the third vehicle 23.

The phrase "selecting out of multiple path planning policy candidates" may refer to "deriving out of multiple path planning policy candidates", "selecting out of two or more path planning policy candidates", "selecting out of multiple pre-stored path planning policy candidates", "selecting out of multiple differing path planning policy candidates" and/or "selecting out of multiple predetermined and/or predeterminable path planning policy candidates". Moreover, "path planning policy candidates" may refer to "path planning policy profiles" and/or merely "candidates", whereas "path planning policy candidates comprising differing sets of driving manoeuvres constraints" may refer to "path planning policy candidates stipulating differing driving manoeuvres constraints", "path planning policy candidates comprising differing respective sets of driving manoeuvres constraints" and/or "path planning policy candidates comprising various sets of driving manoeuvres constraints". The phrase "path planning policy candidates are associated with varying respective predetermined occupant risk conditions", on the other hand, may refer to "path planning policy candidates are tied to varying respective predetermined occupant risk conditions", and according to an example further to "path planning policy candidates are associated with varying respective predetermined occupant risk conditions pertinent varying positions and bodily characteristics of vehicle occupants". Moreover, "a path planning policy candidate representative of said determined occupant injury risk conditions" may refer to "at least a first path planning policy candidate representative of said determined occupant injury risk conditions", "a path planning policy candidate deemed representative of said determined occupant injury risk conditions", "a path planning policy candidate matching, essentially matching, to greatest extent matching and/or to a predeterminable extent matching said determined occupant injury risk conditions", and according to an example further to "a path planning policy candidate representative of said determined occupant injury risk conditions".

Moreover, optionally, the occupant constellation assessment system 1 may - e.g. by means of a **driving path generating unit 104** - be adapted and/or configured for generating a driving path intended for the ADS 31 based on the path planning policy. The occupant constellation assessment system 1 may then further - e.g. by means of a **path signal generating unit 105** - be adapted and/or configured for generating a driving path signal indicative of the driving path for control of the ADS 3. Thereby, a driving path adapted to comply with the path planning policy may be determined, and further, data reflecting said driving path may be provided to the ADS 3 for execution thereof. The driving path may be determined in any feasible manner taking into consideration - in addition to the determined path planning policy - commonly known parameters and/or constraints utilized for driving path generation. The phrase "generating a driving path" may refer to "providing and/or determining a driving path", whereas "driving path intended for said ADS" may refer to "driving path applicable for said ADS". The phrase "generating a driving path [...] based on said path planning policy", on the other hand, may refer to "generating a driving path [...] utilizing said path planning policy as input" and/or "generating a driving path [...] complying with and/or adapted to comply with said path planning policy". Moreover, "generating a driving path signal" may refer to "providing and/or communicating a driving path signal" and/or "providing and/or communicating a driving path signal to said ADS". "A driving path signal", on the other hand, may refer to "driving path data", whereas "driving path signal indicative of said driving path" may refer to "driving path signal reflecting and/or comprising said driving path". The phrase "for control of said ADS", on the other hand, may refer to "for executing and/or actuating by said ADS".

As further shown in Fig. 2, the occupant constellation assessment system 1 comprises an occupant constellation determining unit 101, a risk conditions determining unit 102, a policy determining unit 103, an optional driving path generating unit 104 and an optional path signal generating unit 105, all of which already have been described in greater detail above. Furthermore, the embodiments herein for supporting path planning of an ADS 3 of a vehicle 2, may be implemented through one or more processors, such as a **processor 106,** here denoted CPU, together with computer program code for performing the functions and actions of the embodiments herein. Said program code may also be provided as a computer program product, for instance in the form of a data carrier carrying computer program code for performing the embodiments herein when being loaded into the occupant constellation assessment system 1. One such carrier may be in the form of a CD/DVD ROM disc and/or a hard drive, it is however feasible with other data carriers. The computer program code may furthermore be provided as pure program code on a server and downloaded to the occupant constellation assessment system 1. The occupant constellation assessment system 1 may further comprise a **memory 107** comprising one or more memory units. The memory 107 optionally includes high-speed random access memory, such as DRAM, SRAM, DDR RAM, or other random access solid-state memory devices, and further optionally includes non-volatile memory, such as one or more magnetic disk storage devices, optical disk storage devices, flash memory devices, or other non-volatile solid-state storage devices. Moreover, the memory 107 may be arranged to be used to store e.g. information, and further to store data, configurations, scheduling, and applications, to perform the methods herein when being executed in the occupant constellation assessment system 1. For instance, the computer program code may be implemented in the firmware, stored in FLASH memory 107, of an embedded processor 106, and/or downloaded wirelessly e.g. from an off-board server. Furthermore, the occupant constellation determining unit 101, the risk conditions determining unit 102, the policy determining unit 103, the optional driving path generating unit 104, the optional path signal generating unit 105, the optional processor 106 and/or the optional memory 107, may at least partly be comprised in one or more nodes 108 e.g. ECUs of the vehicle 2, e.g. in and/or in association with the ADS 3. Those skilled in the art will also appreciate that said units 101, 102, 103, 104, 105 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in a memory such as the memory 107, that when executed by the one or more processors such as the processor 106 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

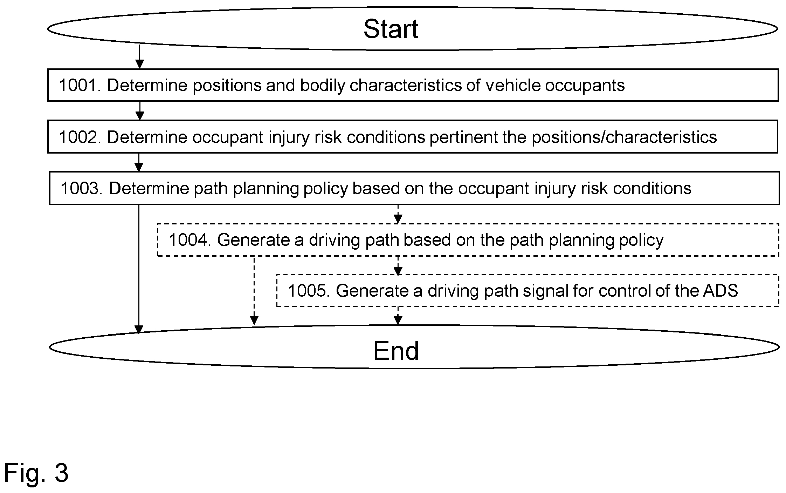

**Fig. 3** is a flowchart depicting an exemplifying method performed by an occupant constellation assessment system 1 according to embodiments of the disclosure. Said method is for supporting path planning of an ADS 3 of a vehicle 2. The exemplifying method, which may be continuously repeated, comprises one or more of the following actions discussed with support from Figs. 1-2. Moreover, the actions may be taken in any suitable order and/or one or more actions may be performed simultaneously and/or in alternate order where applicable. For instance, Action 1001 and Action 1002 may be performed essentially simultaneously and/or in alternate order.

### Action 1001

In Action 1001, the occupant constellation assessment system 1 determines - e.g. with support from the occupant constellation determining unit 101 - positions and bodily characteristics of potential occupants of the vehicle 2.

Optionally, Action 1001 of determining positions of potential occupants of the vehicle 2 may comprise - and/or the occupant constellation determining unit 101 may be adapted and/or configured for - determining positions comprising seat positions, seating directions and/or postures of said potential occupants.

Additionally or alternatively, optionally, Action 1001 of determining bodily characteristics of potential occupants of the vehicle 2 may comprise - and/or the occupant constellation determining unit 101 may be adapted and/or configured for - determining bodily characteristics comprising indications of bodily dimensions, weight, gender, age and/or medical history of said potential occupants.

### Action 1002

In Action 1002, the occupant constellation assessment system 1 determines - e.g. with support from the risk conditions determining unit 102 - occupant injury risk conditions associated with one or more potential critical events pertinent the positions and the bodily characteristics.

Optionally, Action 1002 of determining occupant injury risk conditions may comprise - and/or the risk conditions determining unit 102 may be adapted and/or configured for - determining said occupant injury risk conditions with input from pre-stored statistical data indicative of different types of occupant injuries inflicted by various types of critical events in view of differing vehicle occupants' positions and/or bodily characteristics.

### Action 1003

In Action 1003, the occupant constellation assessment system 1 determines - e.g. with support from the policy determining unit 103 - a path planning policy comprising driving manoeuvres constraints for the ADS 3, based on the occupant injury risk conditions.

Optionally, Action 1003 of determining a path planning policy may comprise - and/or the policy determining unit 103 may be adapted and/or configured for - selecting out of multiple path planning policy candidates comprising differing sets of driving manoeuvres constraints, which path planning policy candidates are associated with varying respective predetermined occupant injury risk conditions, a path planning policy candidate representative of the determined occupant injury risk conditions.

### Action 1004

In optional Action 1004, the occupant constellation assessment system 1 may generate - e.g. with support from the optional driving path generating unit 104 - a driving path intended for the ADS 3, based on the path planning policy.

### Action 1005

In optional Action 1005, the occupant constellation assessment system 1 may generate - e.g. with support from the optional path signal generating unit 105 - a driving path signal indicative of the driving path for control of the ADS 3.

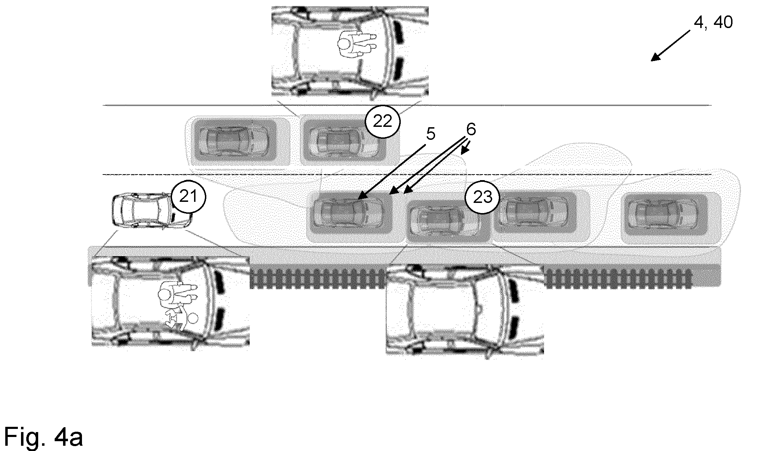

**Figs. 4a****-d** illustrate schematic views of exemplifying **risks maps 4** in view of exemplifying vehicles 2, including the first, second and third vehicle 21, 22, 23. Fig. 4a illustrates a schematic view of a **risk map 40** - such as in view of the first exemplifying vehicle 21 - in the absence of the herein described occupant constellation assessment system 1. There is depicted detected **surrounding vehicles 5,** along with estimated encompassing varying **position/trajectory risks/uncertainties 6** associated with said surrounding vehicles' 5.

In the present context, a risk map 4 estimates and quantifies a view of the "risk" across the ADS's 3 surrounding, and may include sensor capabilities, uncertainties in detections and predictions as well as uncertainties in the available capabilities of the vehicle platform. The risk estimate may thus be understood as a direct estimate of the risk based on a number of models underpinning the worldview of the ADS 3 - i.e. the perceived reality of the ADS 3 using sensor data, map data, etc.- as well as its estimate of its own capabilities. In more detail, the risk map 4 may thus be understood as a virtual map of the surrounding environment of the vehicle 2, built up of the worldview of the ADS 3 including the uncertainties of the detections and predictions, the localisation within a digital map as well as the uncertainties of the capabilities of the vehicle platform. The actuation capability of the vehicle may for example include one or more actuation parameters such as e.g. braking capacity, maximum steering angle, maximum acceleration capability, etc. including an uncertainty estimate for each parameter. The actuation capability and the associated uncertainty estimate(s) may be determined in real-time based on a predefined model given one or more real-time variables such as e.g. current speed, vehicle properties e.g. vehicle dimensions, vehicle weight etc, road surface properties, and so forth, as readily understood by the skilled person in the art. The uncertainty estimates may be derived from predefined statistical models associated with each actuation parameters, where the actuation capability is given by the mean or mode value and the uncertainty estimate is given by e.g. one or two standard deviations above or below the mean. Further details related to forming a risk map of the surrounding environment of the vehicle 2 is available in the European Patent Application No. EP20196794.0 incorporated herein by reference, and will for the sake of brevity and conciseness not be further elaborated upon.

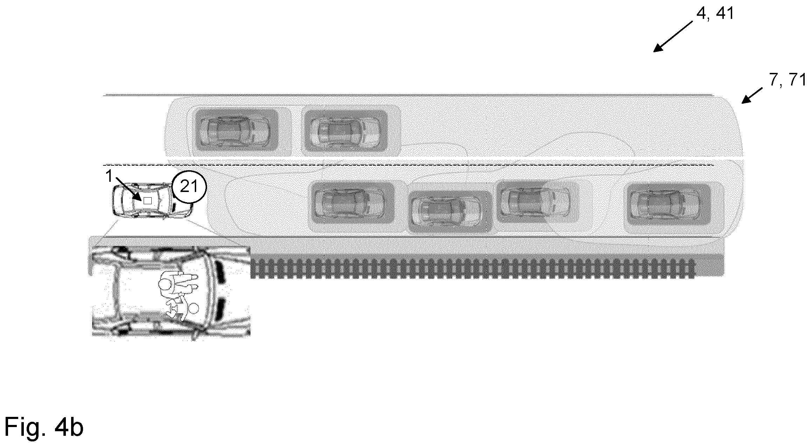

In view of the above, as exemplified in Figs. 4b-d, the determining a path planning policy comprising driving manoeuvres constraints for the ADS 3 based on the occupant injury risk conditions, comprises - and/or the policy determining unit 103 is adapted and/or configured for - establishing one or more of said driving manoeuvres constraints based on, by said occupant injury risk conditions **altered, estimated risks/uncertainties 7** associated with captured vehicle surroundings. Thereby, the information of occupant injury risks, risk exposure and/or vulnerabilities associated with a current vehicle occupant constellation, are used as input to alter risk weighting of a risk model - e.g. risk map 4 - of the ADS 3, based on which one or more driving manoeuvres then may be derived. That is, changing the risk weighting based on the occupant injury risk conditions may impact the path planning by altering the output of the risk model e.g. risk map 4, which in turn could be used as a basis for path planning.

This is exemplified in **Fig. 4b****,** which illustrates a schematic view of an altered risk map 40, in an exemplifying manner referred to as a **first risk map 41** resulting from altered risk weighting in view of the exemplifying first vehicle 21. Here, **altered risks/uncertainties 71** in view of the first vehicle 21 - encompassing the left lane and an increased area in the right lane - reflects a decreased risk appetite for right-hand side collisions when travelling with an infant in the right-hand side front seat. That is, the risk associated with collisions on the right-hand side of the vehicle 21 is elevated due to the presence of the infant. The left lane is thus associated with an elevated risk - due to the risk of crashes from the right and possibly from behind due to high delta speeds - resulting in the ADS 3 avoiding overtakes in this specific situation. Further, to uphold a sufficient level of perceived safety, braking may be amplified, effectively resulting in a larger time-gap such as to the preceding vehicle.

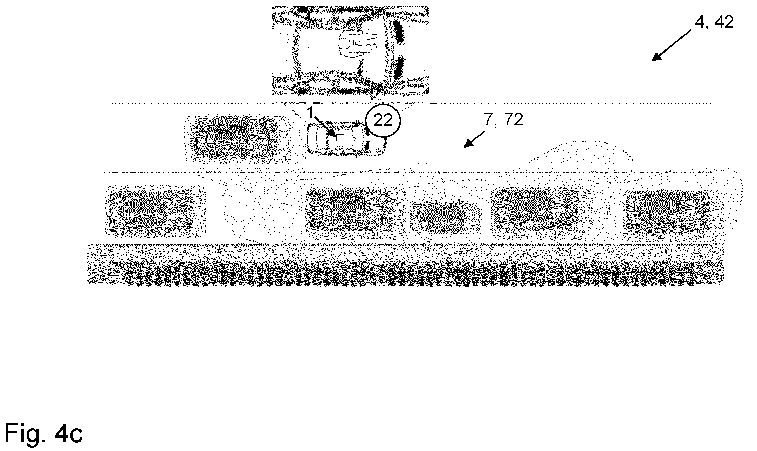

Another example is depicted in **Fig. 4c****,** which similarly illustrates a schematic view of an altered risk map 40, in an exemplifying manner referred to as a **second risk map 42** resulting from altered risk weighting in view of the exemplifying second vehicle 22. Here, **altered risks/uncertainties 72** in view of the second vehicle 22 - represented by modified encompassing areas 72 in respective left and right lanes - reflects that the risk of venturing in the left lane now - with absence of an infant in the left-hand side front seat - is tolerable.

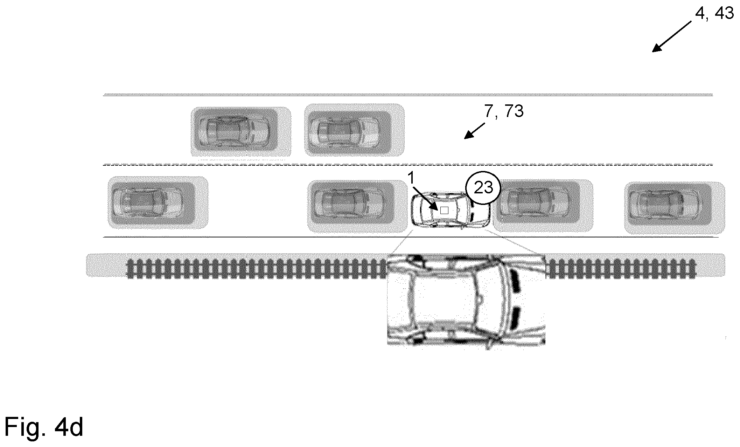

Yet another example is depicted in **Fig. 4d****,** which similarly illustrates a schematic view of an altered risk map 40, in an exemplifying manner referred to as a **third risk map 43** resulting from altered risk weighting in view of the exemplifying third vehicle 23. Here, **altered risks/uncertainties 73** in view of the third vehicle 23 - represented by modified encompassing areas 73 in respective left and right lanes - reflects that the risk associated with visiting the curb has been reduced, allowing a whole different set of evasive manoeuvres for the ADS 3. This increased level of freedom subsequently reduces the risk of being close to any of the surrounding vehicles as a quick turn into the curb could deflect any potentially dangerous behaviour from the close other vehicles. These manoeuvres are available both from a perspective of the lack of need for perceived safety, as well as the lack of risk and/or injuries associated with running into the barrier on the right side. It may be noted that the example depicted in Fig. 4d may be a bit exaggerated to prove the point that the ADS 3 is able to avoid accidents in a much more proficient way when it is not limited to the perceived safety and also can partly disregard harm to the own vehicle 23. However, also the perceived safety of the adjacent vehicles should be considered in the decision of path planning. No decisions should result in an unacceptable level of risk - and/or too low level of perceived safety - to surrounding traffic participants.

The phrase "establishing one or more of said driving manoeuvres constraints" may refer to "determining and/or selecting one or more of said driving manoeuvre constraint", whereas "based on [...] estimated risk/uncertainties" may refer to "from analyzing [...] estimated risk/uncertainties" and according to an example further to "based on [...] in a risk map and/or risk model estimated risk/uncertainties". Moreover, "by said occupant injury risk conditions altered estimated risks/uncertainties" may refer to "by said occupant injury risk conditions affected and/or adapted estimated risks/uncertainties", and according to an example further to "by said occupant injury risk conditions altered risk weighting of estimated risks/uncertainties". The phrase "estimated risks/uncertainties associated with captured vehicle surroundings", on the other hand, may refer to "estimated risks/uncertainties of captured vehicle surroundings", and according to an example further to "estimated risks/uncertainties associated with objects in captured vehicle surroundings".

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by an occupant constellation assessment system (1) for supporting path planning of an automated driving system, ADS (3), of a vehicle (2), said method comprising:
***determining*** (1001) positions and bodily characteristics of potential occupants of said vehicle (2);
***determining*** (1002) occupant injury risk conditions associated with one or more potential critical events applicable for said positions and said bodily characteristics; and
***determining*** (1003) a path planning policy comprising driving manoeuvres constraints for said ADS (3) based on said occupant injury risk conditions, said ***determining*** (1003) a path planning policy being **characterized by** further comprising
estimating risks and/or uncertainties associated with captured vehicle surroundings, in a risk map and/or model;
altering risk weighting of said risk map and/or model based on said occupant injury risk conditions; and
establishing one or more of said driving manoeuvres constraints based on said risk map and/or model.

2. The method according to claim 1,
wherein said ***determining*** (1001) positions comprises determining positions comprising seat positions, seating directions and/or postures of said potential occupants, and/or
wherein said ***determining*** (1001) bodily characteristics comprises determining bodily characteristics comprising indications of bodily dimensions, weight, gender, age and/or medical history of said potential occupants.

3. The method according to claim 1 or 2, wherein said ***determining*** (1002) occupant injury risk conditions comprises determining said occupant injury risk conditions with input from pre-stored statistical data indicative of different types of occupant injuries inflicted by various types of critical events in view of differing vehicle occupants' positions and/or bodily characteristics.

4. The method according to any one of claims 1-3, wherein said ***determining*** (1003) a path planning policy comprises selecting out of multiple path planning policy candidates comprising differing sets of driving manoeuvres constraints, which path planning policy candidates are associated with varying respective predetermined occupant injury risk conditions, a path planning policy candidate representative of said determined occupant injury risk conditions.

5. The method according to any one of claims 1-4, further comprising:
***generating*** (1004) a driving path intended for said ADS (3) based on said path planning policy; and
***generating*** (1005) a driving path signal indicative of said driving path for control of said ADS (3).

6. An **occupant constellation assessment system** (1) for supporting path planning of an automated driving system, ADS (3), of a vehicle (2), said occupant constellation assessment system (1) comprising:
an **occupant constellation determining unit** (101) for ***determining*** (1001) positions and bodily characteristics of potential occupants of said vehicle (2);
a **risk conditions determining unit** (102) for ***determining*** (1002) occupant injury risk conditions associated with one or more potential critical events applicable for said positions and said bodily characteristics; and
a **policy determining unit** (103) for ***determining*** (1003) a path planning policy comprising driving manoeuvres constraints for said ADS (3) based on said occupant injury risk conditions, charcterized in that said policy determining unit (103) is adapted for:
estimating risks and/or uncertainties associated with captured vehicle surroundings, in a risk map and/or model;
altering risk weighting of said risk map and/or model based on said occupant injury risk conditions; and
establishing one or more of said driving manoeuvres constraints based on said risk map and/or model.

7. The occupant constellation assessment system (1) according to claim 6,
wherein said occupant constellation determining unit (101) is adapted for determining positions comprising seat positions, seating directions and/or postures of said potential occupants, and/or
wherein said occupant constellation determining unit (101) is adapted for determining bodily characteristics comprising indications of bodily dimensions, weight, gender, age and/or medical history of said potential occupants.

8. The occupant constellation assessment system (1) according to claim 6 or 7, wherein said risk conditions determining unit (102) is adapted for determining said occupant injury risk conditions with input from pre-stored statistical data indicative of different types of occupant injuries inflicted by various types of critical events in view of differing vehicle occupants' positions and/or bodily characteristics.

9. The occupant constellation assessment system (1) according to any one of claims 6-8, wherein said policy determining unit (103) is adapted for selecting out of multiple path planning policy candidates comprising differing sets of driving manoeuvres constraints, which path planning policy candidates are associated with varying respective predetermined occupant injury risk conditions, a path planning policy candidate representative of said determined occupant injury risk conditions.

10. The occupant constellation assessment system (1) according to any one of claims 6-9, further comprising:
a **driving path generating unit** (104) for ***generating*** (1004) a driving path intended for said ADS (3) based on said path planning policy; and
a **path signal generating unit** (105) for ***generating*** (1005) a driving path signal indicative of said driving path for control of said ADS (3).

11. A **vehicle** (2) comprising an occupant constellation assessment system (1) according to any one of claims 7-10.

12. A computer program product comprising a computer program containing computer program code means arranged to cause a computer or a processor to execute the steps of a method according to any of claims 1-5, stored on a computer-readable medium or a carrier wave.

13. A non-volatile computer readable storage medium having stored thereon the computer program product of claim 12.

## Patentansprüche

1. Verfahren, das von einem System (1) zur Bewertung der Insassenkonstellation zur Unterstützung der Pfadplanung eines automatisierten Fahrsystems, ADS (3), eines Fahrzeugs (2), durchgeführt wird, wobei dieses Verfahren Folgendes umfasst:
Bestimmen (1001) von Positionen und körperlichen Merkmalen potenzieller Insassen des Fahrzeugs (2);
Bestimmen (1002) von Insassenverletzungsrisikobedingungen, die mit einem oder mehreren potenziellen kritischen Ereignissen verbunden sind und für die Positionen und die körperlichen Merkmale gelten; und
Bestimmen (1003) einer Pfadplanungsrichtlinie, die Fahrmanöverrandbedingungen für das ADS (3) umfasst, basierend auf den Insassenverletzungsrisikobedingungen, wobei das Bestimmen (1003) einer Pfadplanungsrichtlinie **dadurch gekennzeichnet ist, dass** es weiter Folgendes umfasst:
Schätzen von Risiken und/oder Unsicherheiten, die mit der erfassten Fahrzeugumgebung verbunden sind, in einer Risikokarte und/oder in einem Risikomodell;
Ändern der Risikogewichtung der Risikokarte und/oder des Risikomodells basierend auf den Insassenverletzungsrisikobedingungen; und
Festlegen einer oder mehrerer der Fahrmanöverrandbedingungen, basierend auf der Risikokarte und/oder dem Risikomodell.

2. Verfahren nach Anspruch 1,
wobei das Bestimmen (1001) von Positionen das Bestimmen von Positionen umfasst, die Sitzpositionen, Sitzrichtungen und/oder Sitzhaltungen der potenziellen Insassen umfassen, und/oder
wobei das Bestimmen (1001) von körperlichen Merkmalen das Bestimmen körperlicher Merkmale umfasst, die Angaben zu Körpermaßen,
Gewicht, Geschlecht, Alter und/oder medizinischer Vorgeschichte der potenziellen Insassen umfassen.

3. Verfahren nach Anspruch 1 oder 2, wobei das Bestimmen (1002) der Insassenverletzungsrisikobedingungen das Bestimmen der Insassenverletzungsrisikobedingungen unter Verwendung vorab gespeicherter statistischer Daten umfasst, die auf verschiedene Arten von Insassenverletzungen hinweisen, die durch verschiedene Arten kritischer Ereignisse unter Berücksichtigung unterschiedlicher Positionen und/oder körperlicher Merkmale von Fahrzeuginsassen verursacht werden.

4. Verfahren nach einem der Ansprüche 1-3, wobei das Bestimmen (1003) einer Pfadplanungsrichtlinie das Auswählen aus mehreren Pfadplanungsrichtlinienkandidaten umfasst, die unterschiedliche Sätze von Fahrmanöverrandbedingungen umfassen, wobei die Pfadplanungsrichtlinienkandidaten mit jeweils unterschiedlichen vorbestimmten Insassenverletzungsrisikobedingungen verknüpft sind, eines Pfadplanungsrichtlinienkandidaten, der die bestimmten Insassenverletzungsrisikobedingungen repräsentiert.

5. Verfahren nach einem der Ansprüche 1-4, weiter umfassend:
Erzeugen (1004) eines für das ADS (3) bestimmten Fahrpfads basierend auf der Pfadplanungsrichtlinie; und
Erzeugen (1005) eines Fahrpfadsignals, das den Fahrpfad angibt, für die Steuerung des ADS (3).

6. System (1) zur Bewertung der Insassenkonstellation zur Unterstützung der Pfadplanung eines automatisierten Fahrsystems, ADS (3), eines Fahrzeugs (2), wobei dieses System (1) zur Bewertung der Insassenkonstellation umfasst:
eine Insassenkonstellationsbestimmungseinheit (101) zum Bestimmen (1001) von Positionen und körperlichen Merkmalen potenzieller Insassen des Fahrzeugs (2);
eine Risikobedingungsbestimmungseinheit (102) zum Bestimmen (1002) von Insassenverletzungsrisikobedingungen, die mit einem oder mehreren potenziellen kritischen Ereignissen verbunden sind und für die Positionen und die körperlichen Merkmale gelten; und
eine Richtlinienbestimmungseinheit (103) zum Bestimmen (1003) einer Pfadplanungsrichtlinie, die Fahrmanöverrandbedingungen für das ADS (3) umfasst, basierend auf den Insassenverletzungsrisikobedingungen, **dadurch gekennzeichnet, dass**
die Richtlinienbestimmungseinheit (103) angepasst ist zum:
Schätzen von Risiken und/oder Unsicherheiten, die mit der erfassten Fahrzeugumgebung verbunden sind, in einer Risikokarte und/oder in einem Risikomodell;
Ändern der Risikogewichtung der Risikokarte und/oder des Risikomodells basierend auf den Insassenverletzungsrisikobedingungen; und
Festlegen einer oder mehrerer der Fahrmanöverrandbedingungen, basierend auf der Risikokarte und/oder dem Risikomodell.

7. System (1) zur Bewertung der Insassenkonstellation nach Anspruch 6,
wobei die Insassenkonstellationsbestimmungseinheit (101) angepasst ist zum Bestimmen von Positionen, die Sitzpositionen, Sitzrichtungen und/oder Sitzhaltungen der potenziellen Insassen umfassen, und/oder
wobei die Insassenkonstellationsbestimmungseinheit (101) angepasst ist zum Bestimmen körperlicher Merkmale, die Angaben zu Körpermaßen, Gewicht, Geschlecht, Alter und/oder medizinischer Vorgeschichte der potenziellen Insassen umfassen.

8. System (1) zur Bewertung der Insassenkonstellation nach Anspruch 6 oder 7, wobei die Risikobedingungsbestimmungseinheit (102) angepasst ist zum Bestimmen der Insassenverletzungsrisikobedingungen unter Verwendung vorab gespeicherter statistischer Daten, die auf verschiedene Arten von Insassenverletzungen hinweisen, die durch verschiedene Arten kritischer Ereignisse unter Berücksichtigung unterschiedlicher Positionen und/oder körperlicher Merkmale von Fahrzeuginsassen verursacht werden.

9. System (1) zur Bewertung der Insassenkonstellation nach einem der Ansprüche 6-8, wobei die Richtlinienbestimmungseinheit (103) angepasst ist zum Auswählen aus mehreren Pfadplanungsrichtlinienkandidaten, die unterschiedliche Sätze von Fahrmanöverrandbedingungen umfassen, wobei die Pfadplanungsrichtlinienkandidaten mit jeweils unterschiedlichen vorbestimmten Insassenverletzungsrisikobedingungen verknüpft sind, eines Pfadplanungsrichtlinienkandidaten, der die bestimmten Insassenverletzungsrisikobedingungen repräsentiert.

10. System (1) zur Bewertung der Insassenkonstellation nach einem der Ansprüche 6-9, weiter umfassend:
eine Fahrpfaderzeugungseinheit (104) zum Erzeugen (1004) eines für das ADS (3) bestimmten Fahrpfads basierend auf der Pfadplanungsrichtlinie; und
eine Pfadsignalerzeugungseinheit (105) zum Erzeugen (1005) eines Fahrpfadsignals, das den Fahrpfad angibt, für die Steuerung des ADS (3).

11. Fahrzeug (2), das ein System (1) zur Bewertung der Insassenkonstellation nach einem der Ansprüche 7-10 umfasst.

12. Computerprogrammprodukt, das ein Computerprogramm umfasst, das Computerprogrammcodemittel enthält, die so angeordnet sind, dass sie einen Computer oder einen Prozessor veranlassen, die Schritte eines Verfahrens nach einem der Ansprüche 1-5 auszuführen, die auf einem computerlesbaren Medium oder einer Trägerwelle gespeichert sind.

13. Nichtflüchtiges computerlesbares Speichermedium, das das darauf gespeicherte Computerprogrammprodukt nach Anspruch 12 aufweist.

## Revendications

1. Procédé mis en œuvre par un système (1) d'évaluation de la constellation d'occupants pour soutenir la planification de trajet d'un système de conduite automatisée, ADS (3), d'un véhicule (2), ledit procédé comprenant :
la détermination (1001) des positions et des caractéristiques corporelles d'occupants potentiels dudit véhicule (2) ;
la détermination (1002) des conditions de risque de blessure des occupants, associées à un ou plusieurs événements critiques potentiels applicables auxdites positions et auxdites caractéristiques corporelles ; et
la détermination (1003) d'une politique de planification de trajet, comprenant des contraintes de manœuvres de conduite pour ledit ADS (3) sur la base desdites conditions de risque de blessure des occupants, ladite détermination (1003) d'une politique de planification de trajet étant **caractérisée en ce qu'**elle comprend en outre :
l'estimation des risques et/ou des incertitudes associés à des environs capturés du véhicule, dans une carte de risques et/ou dans un modèle de risques ;
la modification de la pondération des risques de ladite carte de risques et/ou dudit modèle de risques sur la base desdites conditions de risque de blessure des occupants ; et
l'établissement d'une ou plusieurs desdites contraintes de manœuvres de conduite sur la base de ladite carte de risques et/ou dudit modèle de risques.

2. Procédé selon la revendication 1,
dans lequel ladite détermination (1001) de positions comprend le fait de déterminer des positions comprenant des positions de siège, des directions d'assise et/ou des postures desdits occupants potentiels, et/ou
dans lequel ladite détermination (1001) de caractéristiques corporelles comprend le fait de déterminer des caractéristiques corporelles comprenant des indications de dimensions corporelles, de poids, de sexe, d'âge et/ou d'antécédents médicaux desdits occupants potentiels.

3. Procédé selon la revendication 1 ou la revendication 2, dans lequel ladite détermination (1002) de conditions de risque de blessure des occupants comprend le fait de déterminer lesdites conditions de risque de blessure des occupants à partir de données statistiques préalablement enregistrées indiquant différents types de blessures d'occupants infligées par divers types d'événements critiques compte tenu de positions et/ou de caractéristiques corporelles d'occupants de véhicule différentes.

4. Procédé selon l'une quelconque des revendications 1 à 3, dans lequel ladite détermination (1003) d'une politique de planification de trajet comprend le fait de sélectionner, parmi une pluralité de politiques de planification de trajet candidates comprenant des ensembles différents de contraintes de manœuvres de conduite, lesquelles politiques de planification de trajet candidates sont associées à des conditions variées respectives prédéterminées de risque de blessure des occupants, une politique de planification de trajet candidate représentative desdites conditions de risque de blessure des occupants déterminées.

5. Procédé selon l'une quelconque des revendications 1 à 4, comprenant en outre :
le fait (1004) de générer un trajet de conduite destiné audit ADS (3) sur la base de ladite politique de planification de trajet ; et
le fait (1005) de générer un signal de trajet de conduite indicatif dudit trajet de conduite pour
la commande dudit ADS (3).

6. Système (1) d'évaluation de la constellation d'occupants pour soutenir la planification de trajet d'un système de conduite automatisée, ADS (3), d'un véhicule (2), ledit système (1) d'évaluation de la constellation d'occupants comprenant :
une unité (101) de détermination de constellation d'occupants pour déterminer (1001) des positions et des caractéristiques corporelles d'occupants potentiels dudit véhicule (2) ;
une unité (102) de détermination de conditions pour déterminer (1002) des conditions de risque de blessure des occupants associées à un ou plusieurs événements critiques potentiels applicables auxdites positions et auxdites caractéristiques corporelles ; et
une unité (103) de détermination de politique pour déterminer (1003) une politique de planification de trajet comprenant des contraintes de manœuvres de conduite pour ledit ADS (3) basées sur lesdites conditions de risque de blessure des occupants, **caractérisé en ce que**
ladite unité (103) de détermination de politique de planification de trajet est adaptée pour :
estimer des risques et/ou des incertitudes associés à des environs capturés du véhicule, dans une carte de risques et/ou dans un modèle de risques ;
modifier la pondération des risques de ladite carte de risques et/ou dudit modèle de risques sur la base desdites conditions de risque de blessure des occupants ; et
établir une ou plusieurs desdites contraintes de manœuvres de conduite sur la base de ladite carte de risques et/ou dudit modèle de risques.

7. Système (1) d'évaluation de la constellation d'occupants selon la revendication 6,
dans lequel ladite unité (101) de détermination de constellation d'occupants est adaptée pour déterminer des positions comprenant des positions de siège, des directions d'assise et/ou des postures desdits occupants potentiels, et/ou
dans lequel ladite unité (101) de détermination de constellation d'occupants est adaptée pour déterminer des caractéristiques corporelles comprenant des indications de dimensions corporelles, de poids, de sexe, d'âge et/ou d'antécédents médicaux desdits occupants potentiels.

8. Système (1) d'évaluation de la constellation d'occupants selon la revendication 6 ou la revendication 7, dans lequel ladite unité (102) de détermination de conditions de risque est adaptée pour déterminer lesdites conditions de risque de blessure des occupants à partir de données statistiques préalablement enregistrées indiquant différents types de blessures d'occupants infligées par divers types d'événements critiques compte tenu de positions et/ou de caractéristiques corporelles d'occupants de véhicule différentes.

9. Système (1) d'évaluation de la constellation d'occupants selon l'une quelconque des revendications 6 à 8, dans lequel ladite unité (103) de détermination de politique de planification de trajet est adaptée pour sélectionner, parmi une pluralité de politiques de planification de trajet candidates comprenant des ensembles différents de contraintes de manœuvres de conduite, lesquelles politiques de planification de trajet candidates sont associées à des conditions variées respectives prédéterminées de risque de blessure des occupants, une politique de planification de trajet candidate représentative desdites conditions déterminées de risque de blessure des occupants.

10. Système (1) d'évaluation de la constellation d'occupants selon l'une quelconque des revendications 6 à 9, comprenant en outre :
une unité (104) de génération de trajet de conduite pour générer (1004) un trajet de conduite destiné audit ADS (3) sur la base de ladite politique de planification de trajet ; et
une unité (105) de génération de signal de trajet pour générer (1005) un signal de trajet de conduite indicatif dudit trajet de conduite pour la commande dudit ADS (3).

11. Véhicule (2) comprenant un système (1) d'évaluation de la constellation d'occupants selon l'une quelconque des revendications 7 à 10.

12. Produit de programme informatique comprenant un programme informatique contenant des moyens de code de programme informatique agencés pour amener un ordinateur ou un processeur à mettre en œuvre les étapes d'un procédé selon l'une quelconque des revendications 1 à 5, stocké sur un support lisible par ordinateur ou une onde porteuse.

13. Support de stockage non volatil lisible par ordinateur sur lequel est stocké le produit-programme informatique selon la revendication 12.
